# FASCICULE DE BREVET EUROPEEN

(11) **EP 3 489 152 B1**
(45) Date de publication et mention de la délivrance du brevet: **19.04.2023**
(21) Numéro de dépôt: 18208311.3
(22) Date de dépôt: 26.11.2018
(51) Int. Cl.: B64G 1/66, G02B 23/10, G02B 17/06, G02B 27/34, G01S 3/786, B64G 1/36

(54) **INSTRUMENT D'OBSERVATION COMPORTANT UN AUTOCOLLIMATEUR A MIROIR MONTE SUR VISEUR D'ETOILES**
BEOBACHTUNGSINSTRUMENT MIT EINEM SPIEGEL-AUTOKOLLIMATOR, DER AN EINEM STERNSUCHER MONTIERT IST
OBSERVATION INSTRUMENT COMPRISING AN AUTO-COLLIMATOR WITH MIRROR MOUNTED ON A STAR TRACKER

(30) Priorité: 28.11.2017 FR 1701254
(43) Date de publication de la demande: 29.05.2019
(73) Titulaire: Thales, 92400 Courbevoie (FR)
(72) Inventeur: DUCARNE, Julien, 06156 Cannes (FR); BLANC, Jean-François, 06156 Cannes (FR); DEVILLIERS, Christophe, 06156 Cannes (FR)
(74) Mandataire: Atout PI Laplace

(56) Documents cités:
- FR-A1- 3 011 088
- US-A1- 2009 015 914
- US-B2- 8 085 400
- Taylor Hobson: "Alignment Systems For checking and setting, straightness, alignment, verticality, parallelism, flatness, squareness and level", , 22 septembre 2016 (2016-09-22), XP055509111, Extrait de l'Internet: URL:https://www.taylor-hobson.jp/-/media/a metektaylorhobson/files/product%20download s/micro%20alignment%20telescopes/alignment -systems_lowres_en.pdf [extrait le 2018-09-24]
- Maik Zandvliet: "The Bahtinov Mask, a Focusing Technique for the MeerLICHT Telescope and the Commissioning at Sutherland, South Africa", , 30 octobre 2017 (2017-10-30), XP055610560, Extrait de l'Internet: URL:http://fse.studenttheses.ub.rug.nl/162 16/1/M_Zandvliet_master_thesis.pdf [extrait le 2019-08-02]
- Anonymous: "OptiTest a complete range of Optical Instruments 1 @BULLET OPTITEST -a modular Optical Test Equipment", , 3 mai 2013 (2013-05-03), XP055610622, Extrait de l'Internet: URL:https://www.trioptics.com/fileadmin/as sets/trioptics/04_Downloads/OptiTest/OptiT est-Product-Brochure-E.pdf [extrait le 2019-08-02]

## Description

Le domaine de l'invention est celui des instruments d'observation monté sur satellite et comportant au moins un viseur d'étoile, connu sous l'appellation anglo-saxonne de « startracker ». Un startracker est une caméra montée sur le satellite couplée à des moyens de reconnaissance d'une ou de plusieurs étoiles présentes dans le champ de la caméra. La position de ces étoiles étant connue avec une très grande précision, on en déduit très précisément l'orientation du télescope d'observation monté sur le satellite à partir de l'analyse des images issues de la caméra.

Un des inconvénients des startrackers est qu'il peut exister un biais entre la ligne de visée du télescope spatial et la ligne de visée du startracker utilisé par le système de contrôle d'attitude du satellite ou « AOCS », acronyme de « Attitude and Orbital Control System ». Pour résoudre ce problème, on dispose de plusieurs solutions. La première solution consiste à réduire ce biais en mettant en oeuvre des structures thermoélastiquement stables qui ont nécessairement leurs limitations. La seconde solution consiste à calibrer régulièrement l'instrument par l'acquisition d'images d'objets au sol d'emplacement connu ou d'étoiles connues. Ce type d'acquisition entraîne des contraintes sur les emplacements des startrackers.

Une solution possible pour résoudre cette difficulté est d'installer à l'intérieur du télescope un système optique de contrôle de la ligne de visée. Plusieurs variantes de cette solution ont été développées.

Ainsi, le brevet FR 3 011088 intitulé « Télescope comportant un miroir actif et des moyens de surveillance interne dudit miroir actif » décrit un dispositif de contrôle d'un miroir actif de télescope comportant une source de lumière interne, une optique de contrôle spécifique et des moyens de détection.

Le brevet US 8 085 400 intitulé « Alignment device and method for optical system » décrit des moyens de contrôle fonctionnant à une longueur d'onde différente de celles du télescope. Le miroir arrière du télescope comporte un traitement spécifiquement réfléchissant à cette longueur d'onde de façon à pouvoir réfléchir la lumière issue d'une source de contrôle. Cette solution est optiquement complexe.

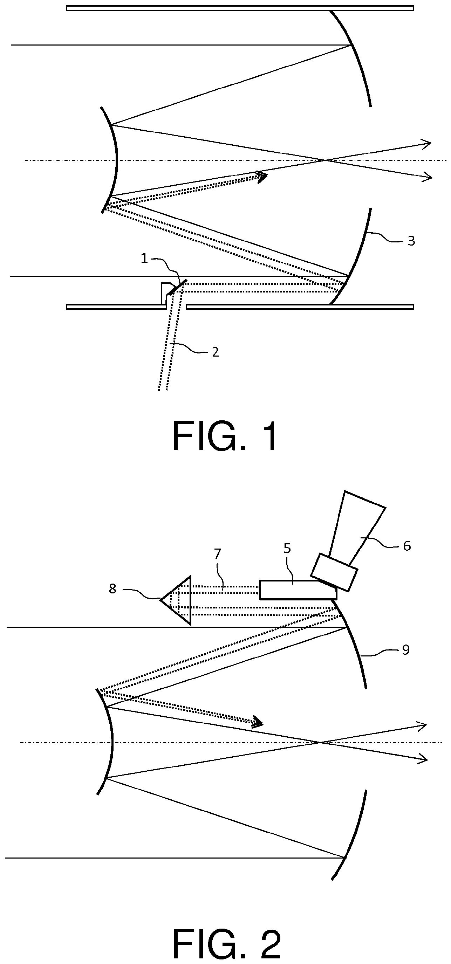

Le brevet EP 2 388 646 intitulé « Procédé de prise d'images » décrit un système de contrôle représenté partiellement en figure 1. Un petit miroir 1 fixé rigidement à la structure du télescope injecte un faisceau de contrôle 2 dans la direction d'observation sur le miroir primaire 3 du télescope. L'analyse de ce faisceau après traversée de l'optique permet de déterminer les écarts à la ligne de visée. Une des faiblesses de ce moyen de contrôle est qu'il repose entièrement sur la stabilité du miroir de renvoi 1.

La demande de brevet WO 2014/140129 intitulée « Procédé de mesure de la direction d'une ligne de visée d'un dispositif d'imagerie » comporte un ensemble de contrôle comportant deux têtes optiques solidaires, la première orientée dans la même direction que la ligne de visée principale et la seconde étant un « startracker ». L'ensemble de contrôle présente une certaine complexité de réalisation.

Enfin, la publication de Leizer et al intitulée « Real-time measurement of line of sight drift in space cameras by a built-in electro-optical system » propose un système de contrôle représenté en figure 2. Il comporte un collimateur 5 fixé rigidement à un startracker 6. Le faisceau laser 7 issu du collimateur 5 est injecté au moyen d'un coin de cube 8 dans la direction d'observation au niveau de la périphérie du miroir primaire 9. L'avantage du coin de cube est qu'il est parfaitement insensible aux variations en rotation. Après avoir traversé l'ensemble de l'optique du télescope, le faisceau laser est reçu par les moyens de détection du télescope situés dans son plan focal. Entre les prises de vues, l'allumage du laser permet de générer une variété d'images où la position de la tache retour dans le plan focal permet d'estimer l'orientation du trièdre par rapport à la ligne de visée. La réalisation du collimateur n'est pas nécessairement simple.

Le moyen de contrôle selon l'invention ne présente pas les inconvénients précédents. Il comporte uniquement une source de lumière située dans le plan focal du télescope et un petit miroir d'autocollimation solidaire de la structure d'un startracker. Plus précisément, l'invention a pour objet un instrument d'observation comportant au moins un télescope, un viseur d'étoiles monté solidairement sur l'armature du télescope et un dispositif de contrôle de la ligne de visée du télescope, ledit dispositif comportant une source de lumière, un miroir plan fonctionnant en auto-collimation et un détecteur, la source de lumière et le détecteur étant disposés dans le plan focal du télescope, caractérisé en ce que le miroir plan est solidaire du viseur d'étoiles et orienté de façon à réfléchir le faisceau collimaté issu de la source de lumière vers le détecteur, la position et la forme de la tache lumineuse focalisée sur le détecteur issue de la réflexion du faisceau collimaté étant représentatives de la direction de la ligne de visée.

Avantageusement, l'instrument d'observation comporte un système d'asservissement comprenant un miroir adaptatif dont la déformation est fonction de la position et de la forme de la tache lumineuse focalisée sur le détecteur.

Avantageusement, l'instrument comporte au moins un second viseur d'étoiles comportant un second miroir plan solidaire du second viseur d'étoiles et orienté de façon à réfléchir un second faisceau collimaté issu de la source de lumière vers le détecteur, la position et la forme de la seconde tache lumineuse focalisée sur le détecteur issue de la réflexion du second faisceau collimaté étant représentatives de la direction de la ligne de visée.

Avantageusement, au moins un miroir plan comporte un masque faisant office de codage de pupille.

Avantageusement, le masque est un disque réfléchissant ou un anneau réfléchissant ou un disque réfléchissant comportant une croix centrale opaque en forme de X ou une surface carrée.

Avantageusement, le masque est un masque de Bahtinov comportant trois grilles réfléchissantes orientées selon trois angles différents.

Avantageusement, au moins un miroir plan comporte un filtre spectral comprenant une signature spectrale connue et unique.

Avantageusement, la source de lumière est une source ponctuelle monochromatique.

Avantageusement, la source de lumière est une source ponctuelle polychromatique.

L'invention sera mieux comprise et d'autres avantages apparaîtront à la lecture de la description qui va suivre donnée à titre non limitatif et grâce aux figures annexées parmi lesquelles :
La figure 1 représente un premier dispositif de contrôle d'un instrument d'observation selon l'art antérieur ;
La figure 2 représente un second dispositif de contrôle d'un instrument d'observation selon l'art antérieur ;
La figure 3 représente le principe d'un dispositif de contrôle d'un instrument d'observation selon l'invention ;
La figure 4 représente les différentes installations possibles d'un miroir de contrôle selon l'invention sur l'armature d'un télescope ;
Les figures 5A à 5E représentent des miroirs de contrôle comportant différents types de masques.

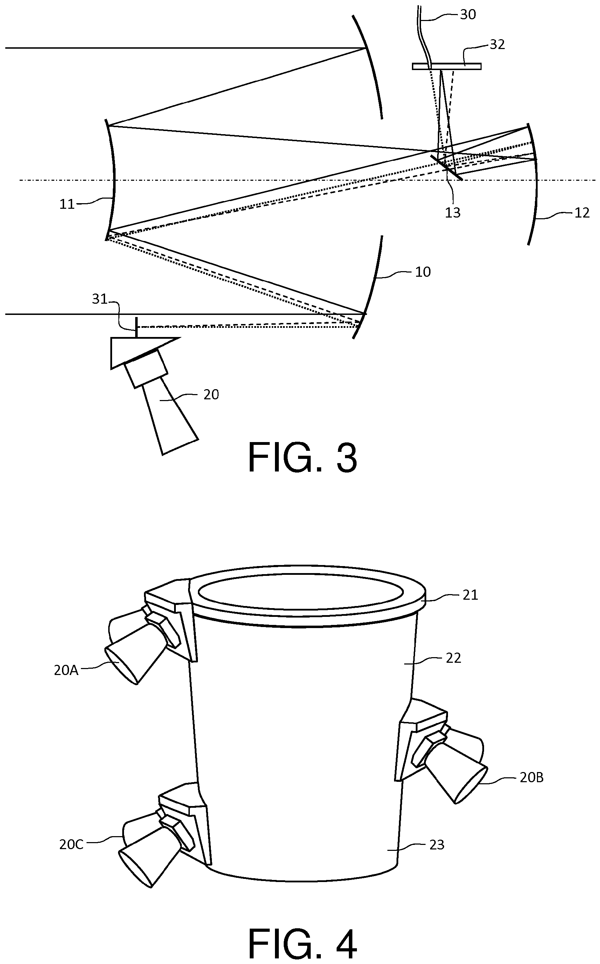

A titre d'exemple non limitatif, la figure 3 représente une vue simplifiée d'un instrument d'observation comportant un dispositif de contrôle selon l'invention. L'instrument comporte essentiellement un télescope, un viseur d'étoiles et un dispositif de contrôle de la ligne de visée du télescope.

Dans le cas de la figure 3, l'optique du télescope comporte quatre miroirs 10, 11, 12 et 13. Le miroir 10 est le miroir primaire concave du télescope, le miroir 11 est un miroir convexe, le miroir 12 est un second miroir concave. Le miroir 13 est un petit miroir plan de renvoi. La combinaison optique formée par les trois miroirs 10, 11 et 12 permet d'obtenir dans son plan focal une image de très bonne qualité optique. Il existe différentes combinaisons optiques possibles connues de l'homme du métier permettant d'atteindre ce résultat. Dans ce plan focal, on dispose un capteur qui est généralement une ou plusieurs barrettes ou une matrice de pixels photosensibles à haute résolution.

Le viseur d'étoiles ou startracker 20 est classiquement une caméra montée sur la structure du télescope et couplée à des moyens de reconnaissance d'une ou de plusieurs étoiles présentes dans le champ de la caméra. Comme on le voit sur la figure 4, le viseur d'étoiles peut être monté à différents endroits de la structure, sans la contrainte de les monter au voisinage des organes de détection. Ainsi, le viseur 20A est monté sur le cadre frontal 21 d'entrée du télescope, le viseur 20B est monté sur la cavité 22 du télescope. Cette cavité peut être un tube comme indiqué sur la figure 4 ou un treillis. Le viseur 20C est monté sur la structure 23 du miroir primaire. Le télescope peut comporter un ou plusieurs viseurs d'étoiles montés à ces différents emplacements. Le montage des viseurs d'étoiles sur la structure est réalisé au moyen de ferrures mécaniques.

Le dispositif de contrôle de la ligne de visée du télescope comporte une source de lumière 30, un miroir plan 31 fonctionnant en auto-collimation et un détecteur 32.

Certains télescopes comportent déjà une source de lumière dans leur plan focal pour les contrôles dits « AIT » signifiant « Assemblage intégration Tests ». Dans ce cas, l'adaptation de l'instrument d'observation est mineure.

Le détecteur peut être le détecteur d'observations terrestres déjà présent dans le télescope ou bien un détecteur spécifique dédié au contrôle de la ligne de visée.

Son fonctionnement est le suivant. La source de lumière émet un faisceau de lumière qui parcourt l'ensemble des optiques du télescope, est réfléchi par le miroir plan 31 qui fonctionne en auto-collimation, c'est-à-dire que le miroir est sensiblement perpendiculaire au faisceau. Le faisceau réfléchi traverse une seconde fois les optiques du télescope et est focalisé sur le détecteur 32. La forme et l'emplacement de la tache de focalisation sont représentatifs de la direction de la ligne de visée et de ses variations en fonction des contraintes thermiques ou mécaniques, par exemple. Le système de contrôle est mis en oeuvre entre les prises de vues de façon à ne pas les perturber.

La source de lumière 30 peut être une source ponctuelle. Dans ce cas, elle peut être une source de lumière fibrée comme on le voit sur la figure 3. La source peut également être une source étendue. Dans ce cas, sa forme est adaptée de façon à simplifier l'identification de la forme et de la position de la tache retour. Par exemple, la source étendue peut avoir une orientation connue et privilégiée.

Cette source peut être monochromatique si l'on utilise une diode laser, par exemple. Elle peut également être polychromatique. L'intérêt d'une source spectralement large est qu'il est possible d'utiliser différents miroirs comportant, chacun un traitement réfléchissant dans une bande spectrale étroite différente de celles des autres miroirs. Ainsi, les différents faisceaux retour portent les signatures spectrales des différents miroirs et on peut les distinguer.

Il est également possible de faire varier la longueur d'onde de cette source, là encore, pour l'adapter à un miroir de collimation particulier.

Le réflecteur plan est rendu solidaire du viseur d'étoiles par une ferrure stable. Il peut comporter des réglages mécaniques permettant de l'orienter puis de le fixer dans la direction souhaitée, lors d'un réglage sur banc optique, au sol, pendant les phases dites « AIT », acronyme signifiant « Assemblage, intégration, Tests ». Ces miroirs sont dits « tip-tilt ».

Optiquement, le réflecteur est un miroir plan de petit diamètre. Ses dimensions sont, par exemple, un ordre de grandeur inférieur à celles du miroir principal du télescope, soit quelques centimètres. Un des avantages du fonctionnement en autocollimation est que les défauts de ligne de visée sont doublés, ce qui augmente la précision du système de contrôle.

Comme il a été dit, le masque peut comporter un traitement réfléchissant adapté au spectre ou à une partie du spectre émis par la source de lumière.

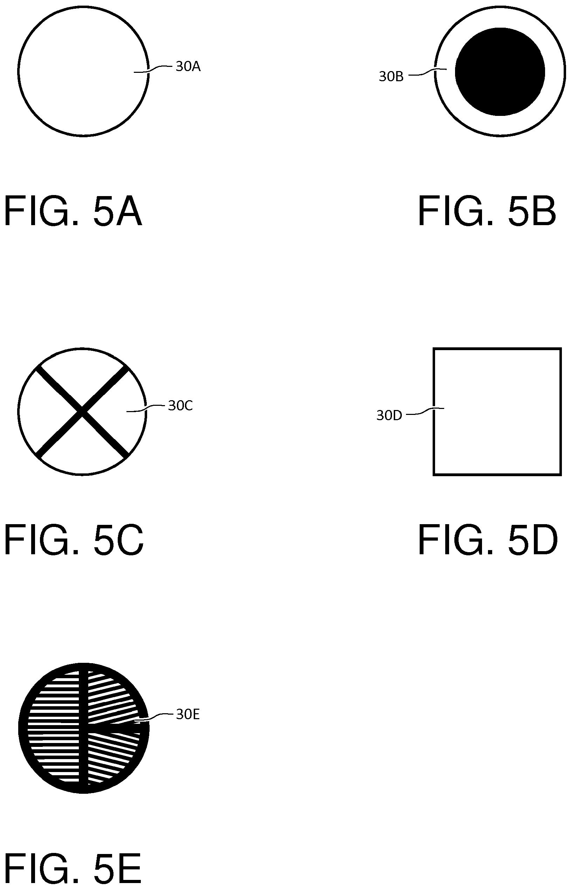

Il peu comporter un masque faisant office de codage de pupille. A titre d'exemples non limitatifs, les figures 5A à 5E représentent cinq types de masques notés 30A à 30E. L'utilisation de masques présente deux avantages. Le premier avantage est que leur forme peut simplifier la détection de l'orientation du miroir plan. Le second avantage est que, si chaque miroir porte un masque différent ou orienté différemment, il est plus facile de les différentier.

Le premier masque 30A est le plus simple. Il s'agit d'un disque réfléchissant. Ce masque donne dans le plan focal une tache dite tache d'Airy à symétrie radiale dont les dimensions sont inversement proportionnelles à celles du disque.

Le second masque 30B est un anneau réfléchissant. Ce masque donne dans le plan focal une tache d'Airy à symétrie radiale composé d'anneaux lumineux concentriques dont les caractéristiques sont fonction des rayons intérieur et extérieur de l'anneau réfléchissant.

Le troisième masque 30C est un disque réfléchissant comportant une croix centrale opaque en forme de X. L'intérêt de ce masque est que son image dans le plan focal s'apparente à une étoile à quatre branches, l'orientation des branches étant représentative de l'orientation de la croix.

Le quatrième masque 30D est une surface carré réfléchissante. Ce masque donne dans le plan focal une croix dont la répartition d'énergie sur deux axes perpendiculaires est un sinus cardinal.

Le cinquième masque 30E est un masque dit de « Bahtinov » comportant trois grilles réfléchissantes orientées selon trois angles différents. Ce masque donne dans le plan focal trois lignes lumineuses principales de diffraction qui se croisent à un même point central, chaque ligne comportant des pics de lumière. Ce masque présente l'avantage d'être très sensible aux défauts de focalisation.

L'analyse des images obtenues au moyen du dispositif peut s'effectuer au sol. Dans ce cas, les images de contrôle sont associées aux images nominalement prises par le télescope et envoyées par télémesure. L'analyse des images obtenues peut s'effectuer également à bord de l'instrument d'observation en utilisant un calculateur de mesures présent à bord.

L'instrument d'observation peut comporter un système d'asservissement comprenant un miroir adaptatif dont la position ou la déformation est fonction de la position et de la forme de la tache lumineuse focalisée sur le détecteur. Ce miroir permet d'asservir la ligne de visée du télescope dans une direction déterminée, ou bien son front d'onde. Un autre avantage de l'asservissement est qu'il est alors possible de relâcher les contraintes de réalisation mécaniques et/ou thermiques de la structure du télescope tout en gardant une ligne de visée parfaitement alignée.

Pour ces phases de test du télescope, il peut se révéler nécessaire de prévoir un moyen d'occultation du miroir plan simplement montable et démontable de façon qu'en phases de réglage, le dispositif de contrôle ne perturbe pas les mesures.

## Revendications

1. Instrument d'observation comportant au moins un télescope, un viseur d'étoiles (20) monté solidairement sur l'armature (21, 22, 23) du télescope et un dispositif de contrôle de la ligne de visée du télescope, ledit dispositif comportant une source de lumière (30), un miroir plan (31) fonctionnant en auto-collimation et un détecteur (32), la source de lumière et le détecteur étant disposés dans le plan focal du télescope, **caractérisé en ce que** le miroir plan est solidaire du viseur d'étoiles et orienté de façon à réfléchir le faisceau collimaté issu de la source de lumière vers le détecteur, la position et la forme de la tache lumineuse focalisée sur le détecteur issue de la réflexion du faisceau collimaté étant représentatives de la direction de la ligne de visée.

2. Instrument d'observation selon la revendication 1, **caractérisé en ce que** l'instrument d'observation comporte un système d'asservissement comprenant un miroir adaptatif dont la déformation est fonction de la position et de la forme de la tache lumineuse focalisée sur le détecteur.

3. Instrument d'observation selon l'une des revendications précédentes, **caractérisé en ce que** l'instrument comporte au moins un second viseur d'étoiles (20A, 20B, 20C) comportant un second miroir plan solidaire du second viseur d'étoiles et orienté de façon à réfléchir un second faisceau collimaté issu de la source de lumière vers le détecteur, la position et la forme de la seconde tache lumineuse focalisée sur le détecteur issue de la réflexion du second faisceau collimaté étant représentatives de la direction de la ligne de visée.

4. Instrument d'observation selon l'une des revendications précédentes, **caractérisé en ce qu'**au moins un miroir plan comporte un masque (30A, 30B, 30C, 30D, 30E) faisant office de codage de pupille.

5. Instrument d'observation selon la revendication 4, **caractérisé en ce que** le masque est un disque réfléchissant (30A) ou un anneau réfléchissant (30B).

6. Instrument d'observation selon la revendication 4, **caractérisé en ce que** le masque est un disque réfléchissant (30C) comportant une croix centrale opaque en forme de X.

7. Instrument d'observation selon la revendication 4, **caractérisé en ce que** le masque est une surface carrée (30D).

8. Instrument d'observation selon la revendication 4, **caractérisé en ce que** le masque est un masque de Bahtinov (30E) comportant trois grilles réfléchissantes orientées selon trois angles différents.

9. Instrument d'observation selon l'une des revendications 3 à 8, **caractérisé en ce qu'**au moins un miroir plan comporte un filtre spectral comprenant une signature spectrale connue et unique.

10. Instrument d'observation selon l'une des revendications 1 à 8, **caractérisé en ce que** la source de lumière est une source ponctuelle monochromatique.

11. Instrument d'observation selon l'une des revendications 1 à 9, **caractérisé en ce que** la source de lumière est une source ponctuelle polychromatique.

## Patentansprüche

1. Beobachtungsinstrument, das mindestens ein Teleskop, einen Sternensucher (20), der fest auf der Armatur (21, 22, 23) des Teleskops montiert ist, und eine Vorrichtung zur Steuerung der Ziellinie des Teleskops aufweist, wobei die Vorrichtung eine Lichtquelle (30), einen Planspiegel (31), der in Selbstkollimation arbeitet, und einen Detektor (32) aufweist, wobei die Lichtquelle und der Detektor in der Brennebene des Teleskops angeordnet sind, **dadurch gekennzeichnet, dass** der Planspiegel fest mit dem Sternensucher verbunden und so ausgerichtet ist, dass er den von der Lichtquelle ausgehenden kollimierten Strahl zum Detektor reflektiert, wobei die Position und die Form des auf den Detektor fokussierten Lichtflecks, der aus der Reflexion des kollimierten Strahls hervorgeht, für die Richtung der Ziellinie repräsentativ sind.

2. Beobachtungsinstrument nach Anspruch 1, **dadurch gekennzeichnet, dass** das Beobachtungsinstrument ein Servosystem aufweist, das einen adaptiven Spiegel umfasst, dessen Verformung von der Position und der Form des auf den Detektor fokussierten Lichtflecks abhängt.

3. Beobachtungsinstrument nach einem der vorhergehenden Ansprüche, **dadurch gekennzeichnet, dass** das Instrument mindestens einen zweiten Sternensucher (20A, 20B, 20C) aufweist, der einen zweiten Planspiegel aufweist, der fest mit dem zweiten Sternensucher verbunden und so ausgerichtet ist, dass er einen von der Lichtquelle ausgehenden zweiten kollimierten Strahl zum Detektor reflektiert, wobei die Position und die Form des auf den Detektor fokussierten zweiten Lichtflecks, der aus der Reflexion des zweiten kollimierten Strahls hervorgeht, für die Richtung der Ziellinie repräsentativ sind.

4. Beobachtungsinstrument nach einem der vorhergehenden Ansprüche, **dadurch gekennzeichnet, dass** mindestens ein Planspiegel eine Maske (30A, 30B, 30C, 30D, 30E) aufweist, die als Pupillencodierung dient.

5. Beobachtungsinstrument nach Anspruch 4, **dadurch gekennzeichnet, dass** die Maske eine reflektierende Scheibe (30A) oder ein reflektierender Ring (30B) ist.

6. Beobachtungsinstrument nach Anspruch 4, **dadurch gekennzeichnet, dass** die Maske eine reflektierende Scheibe (30C) ist, die ein undurchsichtiges X-förmiges Mittelkreuz aufweist.

7. Beobachtungsinstrument nach Anspruch 4, **dadurch gekennzeichnet, dass** die Maske eine quadratische Fläche (30D) ist.

8. Beobachtungsinstrument nach Anspruch 4, **dadurch gekennzeichnet, dass** die Maske eine Bahtinov-Maske (30E) ist, die drei reflektierende Gitter aufweist, die in drei verschiedenen Winkeln ausgerichtet sind.

9. Beobachtungsinstrument nach einem der Ansprüche 3 bis 8, **dadurch gekennzeichnet, dass** mindestens ein Planspiegel einen Spektralfilter aufweist, der eine bekannte und eindeutige spektrale Signatur umfasst.

10. Beobachtungsinstrument nach einem der Ansprüche 1 bis 8, **dadurch gekennzeichnet, dass** die Lichtquelle eine monochromatische Punktquelle ist.

11. Beobachtungsinstrument nach einem der Ansprüche 1 bis 9, **dadurch gekennzeichnet, dass** die Lichtquelle eine polychromatische Punktquelle ist.

## Claims

1. An observation instrument having at least one telescope, a star tracker (20) securely mounted on the armature (21, 22, 23) of the telescope and a device for controlling the line of sight of the telescope, said device having a light source (30), a plane mirror (31) in an autocollimation setup and a detector (32), the light source and the detector being positioned in the focal plane of the telescope, **characterised in that** the plane mirror is securely fastened to the star tracker and oriented so as to reflect the collimated beam from the light source toward the detector, the position and shape of the light spot focused on the detector, resulting from the reflection of the collimated beam, being representative of the direction of the line of sight.

2. The observation instrument according to claim 1, **characterised in that** the observation instrument has a servocontrol system comprising a deformable mirror, the deformation of which depends on the position and shape of the light spot focused on the detector.

3. The observation instrument according to one of the preceding claims, **characterised in that** the instrument has at least one second star tracker (20A, 20B, 20C) having a second plane mirror that is securely fastened to the second star tracker and that is oriented so as to reflect a second collimated beam from the light source toward the detector, the position and shape of the second light spot focused on the detector, resulting from the reflection of the second collimated beam, being representative of the direction of the line of sight.

4. The observation instrument according to one of the preceding claims, **characterised in that** at least one plane mirror has a mask (30A, 30B, 30C, 30D, 30E) acting as a pupil-coding mask.

5. The observation instrument according to claim 4, **characterised in that** the mask is a reflective disc (30A) or a reflective ring (30B).

6. The observation instrument according to claim 4, **characterised in that** the mask is a reflective disc (30C) with an opaque central X-shaped cross.

7. The observation instrument according to claim 4, **characterised in that** the mask is a square area (30D).

8. The observation instrument according to claim 4, **characterised in that** the mask is a Bahtinov mask (30E) having three reflective grids oriented at three different angles.

9. The observation instrument according to one of claims 3 to 8, **characterised in that** at least one plane mirror has a spectral filter comprising a known and unique spectral signature.

10. The observation instrument according to one of claims 1 to 8, **characterised in that** the light source is a monochromatic point source.

11. The observation instrument according to one of claims 1 to 9, **characterised in that** the light source is a polychromatic point source.
